# EUROPEAN PATENT SPECIFICATION

(11) **EP 2 268 697 B1**
(45) Date of publication and mention of the grant of the patent: **29.01.2014**
(21) Application number: 09733268.8
(22) Date of filing: 07.04.2009
(51) Int. Cl.: C08G 59/50, C08G 59/68, C09D 5/03, C09D 163/00

(54) **EPOXY-IMIDAZOLE CATALYSTS USEFUL FOR POWDER COATING APPLICATIONS**
EXPOXID-IMIDAZOL-KATALYSATOREN FÜR PULVERBESCHICHTUNGSANWENDUNGEN
CATALYSEURS ÉPOXY-IMIDAZOLE UTILES POUR DES APPLICATIONS DE REVÊTEMENT PULVÉRULENT

(30) Priority: 14.04.2008 US 44830 P
(43) Date of publication of application: 05.01.2011
(73) Proprietor: Dow Global Technologies LLC, Midland, MI 48674 (US)
(72) Inventor: GAN, Joseph, F-67100 Strasbourg (FR)
(74) Representative: Raynor, John
(86) International application number: PCT/US2009/039771
(87) International publication number: WO 2009/129088

(56) References cited:
- EP-A- 1 348 742
- US-A- 3 756 984
- US-A- 4 066 625
- US-B1- 6 509 413

## Description

### BACKGROUND OF DISCLOSURE

### Field of the Disclosure

Embodiments disclosed herein relate generally to epoxy-imidazole catalysts useful for powder coating applications. More specifically, embodiments disclosed herein relate to solid epoxy-imidazole catalysts formed using a solventless process.

### Background

Imidazoles are widely used as curing agents for epoxy resins because products cured therewith generally exhibit highly desirable physical and chemical properties. However, like most tertiary-nitrogen-containing curing agents, imidazoles react very rapidly with epoxy resin systems, even at room temperatures. Partially reacted imidazole-epoxy systems and imidazole compounds having a secondary amino group in the ring may be used to extend shelf life, with related drawbacks.

To avoid these drawbacks, U.S. Patent No. 3,756,984 discloses the preparation of a range of adducts of mono- and polyepoxides with imidazoles having a secondary amino group in the ring and to the use of such compounds as curing agents, alone or in combination with other curing agents, in epoxy resin compositions, particularly in molding powders or powder coating compositions. These described epoxy-imidazole adducts are in general good curing agents and accelerators for the anhydride curing of polyepoxides. U.S. Patent Nos. 5,310,864 and 4,066,625 discuss other epoxy-imidazole adducts.

The epoxy-imidazole compounds described in the above-listed patents are typically produced in a solvent-based process. The solvent-based process is generally needed to control reaction temperature and to avoid premature gelling of the solid reaction product. Examples of epoxy-imidazole compounds, available from Hexion Specialty Chemicals, Houston, Texas, are the catalytic type curing agents available under the trade designation EPI-CURE, including EPI-CURE P101.

The resulting solid catalyst, as a result of the solvent-based process, necessarily has a minor amount of residual solvent. Certain powder-based (solid) epoxy systems may be affected by this residual solvent.

Accordingly, there exists a need for improved epoxy-imidazole catalyst systems. Additionally, there exists a need to develop powder coating formulations having improved coating performance, such as hot water resistance, cathodic disbond resistance, adhesion, and curability at low temperatures while maintaining other coating properties.

### SUMMARY OF THE DISCLOSURE

In one aspect, embodiments disclosed herein relate to a process of forming a solid epoxy-imidazole catalyst, the process including: contacting an imidazole, an amine selected from monoethanolamine and diethanolamine, and one or more epoxy resins, in the absence of added solvent, to form a solid epoxy-imidazole catalyst.

In another aspect, embodiments disclosed herein relate to an epoxy-imidazole catalyst formed by a process including: contacting an imidazole, an amine selected from monoethanolamine and diethanolamine, and one or more epoxy resins, in the absence of added solvent, to form a solid epoxy-imidazole catalyst.

In another aspect, embodiments disclosed herein relate to a curable composition including an epoxy resin and an epoxy-imidazole catalyst formed by a process including the step of: contacting an imidazole, an amine selected from monoethanolamine and diethanolamine, and one or more epoxy resins, in the absence of added solvent, to form a solid epoxy-imidazole catalyst.

In another aspect, embodiments disclosed herein relate to a process for forming a curable composition, including: contacting an imidazole, an amine selected from monoethanolamine and diethanolamine, and one or more epoxy resins, in the absence of added solvent, to form a solid epoxy-imidazole catalyst; and admixing the solid epoxy-imidazole catalyst with at least one epoxy resin.

Other aspects and advantages will be apparent from the following description and the appended claims.

### DETAILED DESCRIPTION

In one aspect, embodiments disclosed herein relate to epoxy-imidazole catalysts. More specifically, embodiments disclosed herein relate to epoxy-imidazole catalysts formed in a solvent-free process. The resulting catalysts, free of solvent, may be useful for powder coating applications and other applications that may be sensitive to residual solvent.

Solid epoxy-imidazole catalysts may be formed, according to embodiments disclosed herein, by contacting an imidazole, an amine selected from monoethanolamine and diethanolamine, and one or more epoxy resins, in the absence of added solvent. The reaction between the imidazole, the epoxy resin, and the amine, is carried out, at relatively low temperatures (less than 140°C) so as to avoid excess epoxy homopolymerizationand provide for efficient reactions between the epoxy and the imidazole.

The reaction of the epoxy and the imidazole may generate excessive heat due to the exothermic reaction. Thus, according to embodiments described herein, to avoid excessive reaction temperatures, the contacting of the epoxy resin, the amine, and the imidazole may be conducted in a controlled fashion, limiting the amount of a reactant present in the admixture, thus resulting in a controlled exotherm and sufficient heat removal. For example, an initial admixture of the imidazole, amine, and a portion of the epoxy resin may be reacted, resulting in an initial exotherm. The remaining amount of the epoxy resin may be aliquotted to the reactor, allowing for the heat of reaction to be removed from the admixture, thus controlling the temperature of the reaction admixture. Aliquots may include, for example, continuous or semi-continuous addition of the epoxy resin over an extended time period, where the addition rate is selected so as to not result in an undesired exotherm and excessive reaction temperatures.

The overall composition reacted to form the solid epoxy-imidazole catalysts according to embodiments disclosed herein may include from 10 to 35 weight percent of an imidazole, from 65 to 90 weight percent of one or more epoxy resins, and from greater than 0 to 10 weight percent of the amine. The epoxy resins, imidazole, and amines useful in various embodiments are described in more detail below.

### EPOXY RESINS

The epoxy resins used in embodiments disclosed herein may vary and include conventional and commercially available epoxy resins, which may be used alone or in combinations of two or more. In choosing epoxy resins for compositions disclosed herein, consideration should not only be given to properties of the final product, but also to viscosity and other properties that may influence the processing of the resin composition.

The epoxy resin component may be any type of epoxy resin, including any material containing one or more reactive oxirane groups, referred to herein as "epoxy groups" or "epoxy functionality." Epoxy resins useful in embodiments disclosed herein may include mono-functional epoxy resins, multi- or polyfunctional epoxy resins, and combinations thereof. Monomeric and polymeric epoxy resins may be aliphatic, cycloaliphatic, aromatic, or heterocyclic epoxy resins. The polymeric epoxies include linear polymers having terminal epoxy groups (a diglycidyl ether of a polyoxyalkylene glycol, for example), polymer skeletal oxirane units (polybutadiene polyepoxide, for example) and polymers having pendant epoxy groups (such as a glycidyl methacrylate polymer or copolymer, for example). The epoxies may be pure compounds, but are generally mixtures or compounds containing one, two or more epoxy groups per molecule. In some embodiments, epoxy resins may also include reactive -OH groups, which may react at higher temperatures with anhydrides, organic acids, amino resins, phenolic resins, or with epoxy groups (when catalyzed) to result in additional crosslinking.

In general, the epoxy resins may be glycidated resins, cycloaliphatic resins, epoxidized oils, and so forth. The glycidated resins are frequently the reaction product of epichlorohydrin and a bisphenol compound, such as bisphenol A; C₄ to C₂₈ alkyl glycidyl ethers; C₂ to C₂₈ alkyl-and alkenyl-glycidyl esters; C₁ to C₂₈ alkyl-, mono- and poly-phenol glycidyl ethers; polyglycidyl ethers of polyvalent phenols, such as pyrocatechol, resorcinol, hydroquinone, 4,4'-dihydroxydiphenyl methane (or bisphenol F), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphynyl)methane; polyglycidyl ethers of the chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms. Other examples of epoxy resins useful in embodiments disclosed herein include bis-4,4'-(1-methylethylidene) phenol diglycidyl ether and (chloromethyl) oxirane Bisphenol A diglycidyl ether.

In some embodiments, the epoxy resin may include glycidyl ether type; glycidyl-ester type; alicyclic type; heterocyclic type, and halogenated epoxy resins, etc. Non-limiting examples of suitable epoxy resins may include cresol novolac epoxy resin, phenolic novolac epoxy resin, biphenyl epoxy resin, hydroquinone epoxy resin, stilbene epoxy resin, and mixtures and combinations thereof.

Suitable polyepoxy compounds may include resorcinol diglycidyl ether (1,3-bis-(2,3-epoxypropoxy)benzene), diglycidyl ether of bisphenol A (2,2-bis(p-(2,3-epoxypropoxy)phenyl)propane), triglycidyl p-aminophenol (4-(2,3-epoxypropoxy)-N,N-bis(2,3-epoxypropyl)aniline), diglycidyl ether of bromobisphenol A (2,2-bis(4-(2,3-epoxypropoxy)3-bromo-phenyl)propane), diglycidyl ether of Bisphenol F (2,2-bis(p-(2,3-epoxypropoxy)phenyl)methane), triglycidyl ether of meta- and/or para-aminophenol (3-(2,3-epoxypropoxy)N,N-bis(2,3-epoxypropyl)aniline), and tetraglycidyl methylene dianiline (N,N,N',N'-tetra(2,3-epoxypropyl) 4,4'-diaminodiphenyl methane), and mixtures of two or more polyepoxy compounds. A more exhaustive list of useful epoxy resins found may be found in Lee, H. and Neville, K., Handbook of Epoxy Resins, McGraw-Hill Book Company, 1982 reissue.

Other suitable epoxy resins include polyepoxy compounds based on aromatic amines and epichlorohydrin, such as N,N'-diglycidyl-aniline; N,N'-dimethyl-N,N'-diglycidyl-4,4'-diaminodiphenyl methane; N,N,N',N'-tetraglycidyl-4,4'-diaminodiphenyl methane; N-diglycidyl-4-aminophenyl glycidyl ether; and N,N,N',N'-tetraglycidyl-1,3-propylene bis-4-aminobenzoate. Epoxy resins may also include glycidyl derivatives of one or more of: aromatic diamines, aromatic monoprimary amines, aminophenols, polyhydric phenols, polyhydric alcohols, polycarboxylic acids.

Useful epoxy resins include, for example, polyglycidyl ethers of polyhydric polyols, such as ethylene glycol, triethylene glycol, 1,2-propylene glycol, 1,5-pentanediol, 1,2,6-hexanetriol, glycerol, and 2,2-bis(4-hydroxy cyclohexyl)propane; polyglycidyl ethers of aliphatic and aromatic polycarboxylic acids, such as, for example, oxalic acid, succinic acid, glutaric acid, terephthalic acid, 2,6-naphthalene dicarboxylic acid, and dimerized linoleic acid; polyglycidyl ethers of polyphenols, such as, for example, bis-phenol A, bis-phenol F, 1,1-bis(4-hydroxyphenyl)ethane, 1,1-bis(4-hydroxyphenyl)isobutane, and 1,5-dihydroxy naphthalene; modified epoxy resins with acrylate or urethane moieties; glycidylamine epoxy resins; and novolac resins.

The epoxy compounds may be cycloaliphatic or alicyclic epoxides. Examples of cycloaliphatic epoxides include diepoxides of cycloaliphatic esters of dicarboxylic acids such as bis(3,4-epoxycyclohexylmethyl)oxalate, bis(3,4-epoxycyclohexylmethyl)adipate, bis(3,4-epoxy-6-methylcyclohexylmethyl)adipate, bis(3,4-epoxycyclohexylmethyl)pimelate; vinylcyclohexene diepoxide; limonene diepoxide; dicyclopentadiene diepoxide; and the like. Other suitable diepoxides of cycloaliphatic esters of dicarboxylic acids are described, for example, in U.S. Patent No. 2,750,395.

Other cycloaliphatic epoxides include 3,4-epoxycyclohexylmethyl-3,4-epoxycyclohexane carboxylates such as 3,4-epoxycyclohexylmethyl-3,4-epoxycyclohexane carboxylate; 3,4-epoxy-1-methylcyclohexyl-methyl-3,4-epoxy-1-methylcyclohexane carboxylate; 6-methyl-3,4-epoxycyclohexylmethylmethyl-6-methyl-3,4-epoxycyclohexane carboxylate; 3,4-epoxy-2-methylcyclohexylmethyl-3,4-epoxy-2-methylcyclohexane carboxylate; 3,4-epoxy-3-methylcyclohexyl-methyl-3,4-epoxy-3-methylcyclohexane carboxylate; 3,4-epoxy-5-methylcyclohexyl-methyl-3,4-epoxy-5-methylcyclohexane carboxylate and the like. Other suitable 3,4-epoxycyclohexylmethyl-3,4-epoxycyclohexane carboxylates are described, for example, in U.S. Patent No. 2,890,194.

Further epoxy-containing materials which are particularly useful include those based on glycidyl ether monomers. Examples are di- or polyglycidyl ethers of polyhydric phenols obtained by reacting polyhydric phenol with an excess of chlorohydrin such as epichlorohydrin. Such polyhydric phenols include resorcinol, bis(4-hydroxyphenyl)inethane (known as bisphenol F), 2,2-bis(4-hydroxyphenyl)propane (known as bisphenol A), 2,2-bis(4'-hydroxy-3',5'-dibromophenyl)propane, 1,1,2,2-tetrakis(4'-hydroxy-phenyl)ethane or condensates of phenols with formaldehyde that are obtained under acid conditions such as phenol novolacs and cresol novolacs. Examples of this type of epoxy resin are described in U.S. Patent No. 3,018,262. Other examples include di- or polyglycidyl ethers of polyhydric alcohols such as 1,4-butanediol, or polyalkylene glycols such as polypropylene glycol and di- or polyglycidyl ethers of cycloaliphatic polyols such as 2,2-bis(4-hydroxycyclohexyl)propane. Other examples are monofunctional resins such as cresyl glycidyl ether or butyl glycidyl ether.

Other classes of epoxy compounds include polyglycidyl esters and poly(beta-methylglycidyl) esters of polyvalent carboxylic acids such as phthalic acid, terephthalic acid, tetrahydrophthalic acid or hexahydrophthalic acid. A further class of epoxy compounds are N-glycidyl derivatives of amines, amides and heterocyclic nitrogen bases such as N,N-diglycidyl aniline, N,N-diglycidyl toluidine, N,N,N',N'-tetraglycidyl bis(4-aminophenyl)methane, triglycidyl isocyanurate, N,N'-diglycidyl ethyl urea, N,N'-diglycidyl-5,5-dimethylhydantoin, and N,N'-diglycidyl-5-isopropylhydantoin.

Still other epoxy-containing materials are copolymers of acrylic acid esters of glycidol such as glycidylacrylate and glycidylmethacrylate with one or more copolymerizable vinyl compounds. Examples of such copolymers are 1:1 styrene-glycidylmethacrylate, 1:1 methylmethacrylate-glycidylacrylate and a 62.5:24:13.5 methylmethacrylate-ethyl acrylate-glycidylmethacrylate.

Epoxy compounds that are readily available include octadecylene oxide; glycidylmethacrylate; diglycidyl ether of bisphenol A; D.E.R.* 331, D.E.R.* 332 and D.E.R.* 330 from The Dow Chemical Company, Midland, Michigan; vinylcyclohexene dioxide; 3,4-epoxycyclohexylmethyl-3,4-epoxycyclohexane carboxylate; 3,4-epoxy-6-methylcyclohexyl-methyl-3,4-epoxy-6-methylcyclohexane carboxylate; bis(3,4-epoxy-6-methylcyclohexylmethyl) adipate; bis(2,3-epoxycyclopentyl) ether; aliphatic epoxy modified with polypropylene glycol; dipentene dioxide; epoxidized polybutadiene; silicone resin containing epoxy functionality; flame retardant epoxy resins (such as a brominated bisphenol type epoxy resin available under the tradename D.E.R.* 560, available from The Dow Chemical Company, Midland, Michigan); 1,4-butanediol diglycidyl ether of phenol-formaldehyde novolac (such as those available under the tradenames D.E.N.* 431 and D.E.N.* 438 available from The Dow Chemical Company, Midland, Michigan); and resorcinol diglycidyl ether Although not specifically mentioned, other epoxy resins under the trade name designations D.E.R.* and D.E.N.* available from the Dow Chemical Company may also be used. In some embodiments, epoxy resin compositions may include epoxy resins formed by reaction of a diglycidyl ether of bisphenol A with bisphenol A.

Other suitable epoxy resins are disclosed in U.S. Patent No. 5,112,932, which is incorporated herein by reference. Such epoxy resins may include epoxy terminated polyoxazolidone-containing compounds, including, for example, the reaction product of a polyepoxide compound with a polyisocyanate compound. Polyepoxides disclosed may include diglycidyl ether of 2,2-bis(4-hydroxyphenyl) propane (generally referred to as bisphenol A) and diglycidyl ether of 2,2-bis(3,5-dibromo-4-hydroxyphenyl) propane (generally referred to as tetrabromobisphenol A). Suitable polyisocyanates include 4,4'-methylene bis(phenylisocyanate) (MDI) and isomers thereof, higher functional homologs of MDI (commonly designated as "polymeric MDI"), toluene diisocyanate (TDI) such as 2,4-toluene diisocyanate and 2,6-toluene diisocyanate, m-xylylene diisocyanate, hexamethylene diisocyanate (HMDI) and isophoronediisocyanate.

Other suitable epoxy resins are disclosed in, for example, U.S. Patent Nos. 7,163,973, 6,887,574, 6,632,893, 6,242,083, 7,037,958, 6,572,971, 6,153,719, and 5,405,688, PCT Publication WO 2006/052727, and U.S. Patent Application Publication Nos. 20060293172 and 20050171237, each of which is hereby incorporated herein by reference.

### IMIDAZOLE

Imidazole compounds useful in embodiments disclosed herein include compounds having one imidazole ring per molecule, such as imidazole, 2-methylimidazole, 2-ethyl-4-methylimidazole, 2-methyl-4-ethyl imidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-methylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole, 2,4-diamino-6-[2'-methylimidazolyl-(1)']-ethyl-s-triazine, 2,4-diamino-6-[2'-ethyl-4-methylimidazolyl-(1)']-ethyl-s-triazine, 2,4-diamino-6-[2'-undecylimidazolyl-(1)']-ethyl-s-triazine, 2-methyl-imidazo-lium-isocyanuric acid adduct, 2-phenylimidazolium-isocyanuric acid adduct, 1-aminoethyl-2-methylimidazole, 2-phenyl-4,5-dihydroxymethylimidazole, 2-phenyl-4-methyl-5-hydroxymethylimidazole, 2-phenyl-4-benzyl-5-hydroxymethylimidazole and the like; and compounds containing 2 or more imidazole rings per molecule which are obtained by dehydrating above-named hydroxymethyl-containing imidazole compounds such as 2-phenyl-4,5-dihydroxymethylimidazole, 2-phenyl-4-methyl-5-hydroxymethylimidazole and 2-phenyl-4-benzyl-5-hydroxy-methylimidazole; and condensing them with formaldehyde, e.g., 4,4'-methylene-bis-(2-ethyl-5-methylimidazole), and the like.

### AMINE

The amine catalyst is selected from monoethanolamine, diethanolamine, and combinations thereof.

### ADDITIONAL HARDENERS / CURING AGENTS

In addition to the epoxy-imidazole compounds described above, additional hardeners or curing agents may also be provided for promoting crosslinking of the epoxy resin composition to form a polymer composition. The additional hardeners and curing agents may be used individually or as a mixture of two or more. The curing agent component (also referred to as a hardener or cross-linking agent) may include any compound having an active group being reactive with the epoxy group of the epoxy resin. The curing agents may include nitrogen-containing compounds such as amines and their derivatives; oxygen-containing compounds such as carboxylic acid terminated polyesters, anhydrides, phenol novolacs, bisphenol-A novolacs, DCPD-phenol condensation products, brominated phenolic oligomers, amino-formaldehyde condensation products, phenol, bisphenol A and cresol novolacs, phenolic-terminated epoxy resins; sulfur-containing compounds such as polysulfides, polymercaptans; and catalytic curing agents such tertiary amines, Lewis acids, Lewis bases and combinations of two or more of the above curing agents. Practically, polyamines, diaminodiphenylsulfone and their isomers, aminobenzoates, various acid anhydrides, phenol-novolac resins and cresol- novolac resins, for example, may be used, but the present disclosure is not restricted to the use of these compounds.

Other embodiments of cross-linkers that may be used are described in U.S. Patent No 6,613,839, and include, for example, copolymers of styrene and maleic anhydride having a molecular weight (M_{w}) in the range of from 1500 to 50,000 and an anhydride content of more than 15 percent.

Other components that may be useful in the compositions disclosed herein include curing catalysts. Examples of curing catalyst include imidazole derivatives, tertiary amines, and organic metallic salts. Other examples of such curing catalysts include free radical initiators, such as azo compounds including azoisobutyronitrile, and organic peroxides, such as tertiary-butyl perbenzoate, tertiary-butyl peroctoate, and benzoyl peroxide; methyl ethyl ketone peroxide, acetoacetic peroxide, cumene hydroperoxide, cyclohexanone hydroperoxide, dicumyl peroxide, and mixtures thereof. Methyl ethyl ketone peroxide and benzoyl peroxide are preferably used in the present invention.

In some embodiments, curing agents may include primary and secondary polyamines and adducts thereof, anhydrides, and polyamides. For example, polyfunctional amines may include aliphatic amine compounds such as diethylene triamine (D.E.H.* 20, available from The Dow Chemical Company, Midland, Michigan), triethylene tetramine (D.E.H.* 24, available from The Dow Chemical Company, Midland, Michigan), tetraethylene pentamine (D.E.H.* 26, available from The Dow Chemical Company, Midland, Michigan), as well as adducts of the above amines with epoxy resins, diluents, or other amine-reactive compounds. Aromatic amines, such as metaphenylene diamine and diamine diphenyl sulfone, aliphatic polyamines, such as amino ethyl piperazine and polyethylene polyamine, and aromatic polyamines, such as metaphenylene diamine, diamino diphenyl sulfone, and diethyltoluene diamine, may also be used.

Anhydride curing agents may include, for example, nadic methyl anhydride, hexahydrophthalic anhydride, trimellitic anhydride, dodecenyl succinic anhydride, phthalic anhydride, methyl hexahydrophthalic anhydride, tetrahydrophthalic anhydride, and methyl tetrahydrophthalic anhydride, among others. Anhydride curing agents may also include copolymers of styrene and maleic acid anhydrides and other anhydrides as described in U.S. Patent No. 6,613,839, which is incorporated herein by reference.

In some embodiments, the phenol novolac hardener may contain a biphenyl or naphthyl moiety. The phenolic hydroxy groups may be attached to the biphenyl or naphthyl moiety of the compound. This type of hardener may be prepared, for example, according to the methods described in EP915118A1. For example, a hardener containing a biphenyl moiety may be prepared by reacting phenol with bismethoxy-methylene biphenyl.

In other embodiments, curing agents may include boron trifluoride monoethylamine, and diaminocyclohexane. Curing agents may also include imidazoles, their salts, and adducts. These epoxy curing agents are typically solid at room temperature. One example of suitable imidazole curing agents includes 2-phenylimidazole; other suitable imidazole curing agents are disclosed in EP906927A1. Other curing agents include aromatic amines, aliphatic amines, anhydrides, and phenols.

In some embodiments, the curing agents may be an amino compound having a molecular weight up to 500 per amino group, such as an aromatic amine or a guanidine derivative. Examples of amino curing agents include 4-chlorophenyl-N,N-dimethyl-urea and 3,4-dichlorophenyl-N,N-dimethyl-urea.

Other examples of curing agents useful in embodiments disclosed herein include: 3,3'- and 4,4'-diaminodiphenylsulfone; methylenedianiline; bis(4-amino-3,5-dimethylphenyl)-1,4-diisopropylbenzene available as EPON 1062 from Shell Chemical Co.; and bis(4-aminophenyl)-1,4-diisopropylbenzene available as EPON 1061 from Shell Chemical Co.

Thiol curing agents for epoxy compounds may also be used, and are described, for example, in U.S. Patent No. 5,374,668. As used herein, "thiol" also includes polythiol or polymercaptan curing agents. Illustrative thiols include aliphatic thiols such as methanedithiol, propanedithiol, cyclohexanedithiol, 2-mercaptoethyl-2,3-dimercaptosuccinate, 2,3-dimercapto-1-propanol(2-mercaptoacetate), diethylene glycol bis(2-mercaptoacetate), 1,2-dimercaptopropyl methyl ether, bis(2-mercaptoethyl)ether, trimethylolpropane tris(thioglycolate), pentaerythritol tetra(mercaptopropionate), pentaerythritol tetra(thioglycolate), ethyleneglycol dithioglycolate, trimethylolpropane tris(beta-thiopropionate), tris-mercaptan derivative of tri-glycidyl ether of propoxylated alkane, and dipentaerythritol poly(beta-thiopropionate); halogen-substituted derivatives of the aliphatic thiols; aromatic thiols such as di-, tris- or tetra-mercaptobenzene, bis-, tris- or tetra-(mercaptoalkyl)benzene, dimercaptobiphenyl, toluenedithiol and naphthalenedithiol; halogen-substituted derivatives of the aromatic thiols; heterocyclic ring-containing thiols such as amino-4,6-dithiol-sym-triazine, alkoxy-4,6-dithiol-sym-triazine, aryloxy-4,6-dithiol-sym-triazine and 1,3,5-tris(3-mercaptopropyl) isocyanurate; halogen-substituted derivatives of the heterocyclic ring-containing thiols; thiol compounds having at least two mercapto groups and containing sulfur atoms in addition to the mercapto groups such as bis-, tris- or tetra(mercaptoalkylthio)benzene, bis-, tris- or tetra(mercaptoalkylthio)alkane, bis(mercaptoalkyl) disulfide, hydroxyalkylsulfidebis(mercaptopropionate), hydroxyalkylsulfidebis(mercaptoacetate), mercaptoethyl ether bis(mercaptopropionate), 1,4-dithian-2,5-diolbis(mercaptoacetate), thiodiglycolic acid bis(mercaptoalkyl ester), thiodipropionic acid bis(2-mercaptoalkyl ester), 4,4-thiobutyric acid bis(2-mercaptoalkyl ester), 3,4-thiophenedithiol, bismuththiol and 2,5-dimercapto-1,3,4-thiadiazol.

The curing agent may also be a nucleophilic substance such as an amine, a tertiary phosphine, a quaternary ammonium salt with a nucleophilic anion, a quaternary phosphonium salt with a nucleophilic anion, an imidazole, a tertiary arsenium salt with a nucleophilic anion, and a tertiary sulfonium salt with a nucleophilic anion.

Aliphatic polyamines that are modified by adduction with epoxy resins, acrylonitrile, or (meth)acrylates may also be utilized as curing agents. In addition, various Mannich bases can be used. Aromatic amines wherein the amine groups are directly attached to the aromatic ring may also be used.

Quaternary ammonium salts with a nucleophilic anion useful as a curing agent in embodiments disclosed herein may include tetraethyl ammonium chloride, tetrapropyl ammonium acetate, hexyl trimethyl ammonium bromide, benzyl trimethyl ammonium cyanide, cetyl triethyl ammonium azide, N,N-dimethylpyrolidinium cyanate, N-methylpyridinium phenolate, N-methyl-o-chloropyridinium chloride, methyl viologen dichloride and the like.

In some embodiments, at least one cationic photoinitiator may be used. Cationic photoinitiators include compounds that decompose when exposed to electromagnetic radiation of a particular wavelength or range of wavelengths to form a cationic species that may catalyze the polymerization reaction, such as between an epoxide group and a hydroxyl group. That cationic species may also catalyze the reaction of epoxide groups with other epoxide-reactive species contained in the curable composition (such as other hydroxyl groups, amine groups, phenolic groups, mercaptan groups, anhydride groups, carboxylic acid groups and the like). Examples of cationic photoinitiators include diaryliodonium salts and triarylsulfonium salts. For example, a diaryliodonium salt type of photoinitiator is available from Ciba-Geigy under the trade designation IRGACURE 250. A triarylsulfonium-type photoinitiator is available from The Dow Chemical Company as CYRACURE 6992. The cationic photoinitiator may be used in a catalytically effective amount, and may constitute up to about 10 weight percent of the curable composition

### FLAME RETARDANT ADDITIVES

The resin compositions described herein may be used in formulations that contain brominated and non-brominated flame retardants. Specific examples of brominated additives include tetrabromobisphenol A (TBBA) and materials derived therefrom: TBBA-diglycidyl ether, reaction products of bisphenol A or TBBA with TBBA-diglycidyl ether, and reaction products of bisphenol A diglycidyl ether with TBBA.

Non-brominated flame retardants include the various materials derived from DOP (9,10-dihydro-9-oxa-10-phosphaphenanthrene 10-oxide) such as DOP-hydroquinone (10-(2',5'-dihydroxyphenyl)-9,10-dihydro-9-oxa-10-phosphaphenanthrene 10-oxide), condensation products of DOP with glycidyl ether derivatives of novolacs, and inorganic flame retardants such as aluminum trihydrate and aluminum phosphinite.

### OPTIONAL ADDITIVES

Curable and thermoset compositions disclosed herein may optionally include conventional additives and fillers. Additives and fillers may include, for example, other flame retardants, boric acid, silica, glass, talc, metal powders, titanium dioxide, wetting agents, pigments, coloring agents, mold release agents, coupling agents, ion scavengers, UV stabilizers, flexibilizing agents, toughening agents, and tackifying agents. Additives and fillers may also include fumed silica, aggregates such as glass beads, polytetrafluoroethylene, polyol resins, polyester resins, phenolic resins, graphite, molybdenum disulfide, abrasive pigments, viscosity reducing agents, boron nitride, mica, nucleating agents, and stabilizers, among others. Fillers and modifiers may be preheated to drive off moisture prior to addition to the epoxy resin composition. Additionally, these optional additives may have an effect on the properties of the composition, before and/or after curing, and should be taken into account when formulating the composition and the desired reaction product. Curable compositions disclosed herein may also optionally contain other additives of a generally conventional type including for example, stabilizers, other organic or inorganic additives, pigments, wetting agents, flow modifiers, UV light blockers, and fluorescent additives. These additives may be present in amounts of from 0 to 5 weight- percent in some embodiments, and less than 3 weight percent in other embodiments. Examples of suitable additives are also described in U.S. Patent No. 5,066,735 and PCT/US2005/017954.

### CUTABLE COMPOSITIONS

Curable compositions may be formed by combining epoxy-imidazole catalysts, as described above, with an epoxy resin, such as those described above. Curable compositions described herein may be formed by combining an epoxy resin and the epoxy-imidazole catalyst, along with additional hardeners, additives, catalysts, and other optional components. For example, in some embodiments, a curable composition may be formed by admixing an epoxy resin composition and an epoxy-imidazole compound, without a catalyst, to form a mixture. The proportions of the epoxy resin and the epoxy-imidazole catalyst may depend, in part, upon the properties desired in the curable composition or cured compositions to be produced, the desired cure response of the composition, and the desired storage stability of the composition (desired shelf life). In other embodiments, a process to form a curable composition may include one or more of the steps of forming an epoxy resin or prepolymer composition, admixing an epoxy-imidazole catalyst, admixing additional hardeners or catalysts, admixing a flame retardant, and admixing additives.

In some embodiments, the epoxy resin may be present in the curable composition in an amount ranging from 0.1 to 99 weight percent of the curable composition. In other embodiments, the epoxy composition may range from 5 to 80 weight percent of the curable composition; from 15 to 60 weight percent in other embodiments; and from 25 to 40 weight percent in yet other embodiments. In other embodiments, the epoxy composition may range from 30 to 99 weight percent of the curable composition; from 50 to 99 weight percent in other embodiments; from 60 to 95 weight percent in other embodiments; and from 70 to 90 weight percent in yet other embodiments.

In some embodiments, curable compositions may include from about 30 to about 98 volume percent epoxy resin. In other embodiments, curable compositions may include 65 to 95 volume percent epoxy resin; from 70 to 90 volume percent epoxy resin in other embodiments; from 30 to 65 volume percent epoxy resin in other embodiments; and from 40 to 60 volume percent epoxy resin in yet other embodiments.

In some embodiments, epoxy-imidazole adducts formed according to embodiments disclosed herein may be present in the curable composition in an amount ranging from 0.01 weight percent to 60 weight percent. In other embodiments, the epoxy-imidazole adducts may be present in an amount ranging from 0.1 weight percent to 55 weight percent; from 0.5 weight percent to 50 weight percent in other embodiments; and from 1 to 45 weight percent in yet other embodiments.

In some embodiments, a catalyst may be present in the curable composition in an amount ranging from 0.01 weight percent to 10 weight percent. In other embodiments, the catalyst may be present in an amount ranging from 0.1 weight percent to 8 weight percent; from 0.5 weight percent to 6 weight percent in other embodiments; and from 1 to 4 weight percent in yet other embodiments.

In a class of embodiments, curable composition described herein may include: 30 to 99 weight percent of an epoxy resin, 0.01 to 10 weight percent of an amine catalyst; 1 to 40 weight percent of the epoxy-imidazole adducts, where the weight percentages given are based on the combined weight of the amine catalyst, the epoxy-imidazole adduct, and the epoxy resin.

In some embodiments, additional hardeners may also be admixed with the epoxy compositions described herein. Variables to consider in selecting additional hardeners and an amount of the additional hardener may include, for example, properties of the resin composition, the desired properties of the cured composition (flexibility, electrical properties, etc.), desired cure rates, as well as the number of reactive groups per hardener molecule, such as the number of active hydrogens in an amine. The amount of additional hardener used may vary from 0.1 to 150 parts per hundred parts resin composition, by weight, in some embodiments. In other embodiments, the additional hardener may be used in an amount ranging from 1 to 95 parts per hundred parts resin composition, by weight; the hardener may be used in an amount ranging from 2.5 to 90 parts per hundred parts resin composition, by weight, in other embodiments; and from 5 to 85 parts per hundred parts resin composition, by weight, in yet other embodiments.

Curable compositions may also include from about 0.1 to about 50 volume percent optional additives in some embodiments. In other embodiments, curable compositions may include from about 0.1 to about 5 volume percent optional additives; and from about 0.5 to about 2.5 volume percent optional additives in yet other embodiments.

### SUBSTRATES

The curable compositions described above may be disposed on a substrate and cured. The substrate is not subject to particular limitation. As such, substrates may include metals, such as stainless steel, iron, steel, copper, zinc, tin, aluminum, alumite and the like; alloys of such metals, and sheets which are plated with such metals and laminated sheets of such metals. Substrates may also include polymers, glass, and various fibers, such as, for example, carbon/graphite; boron; quartz; aluminum oxide; glass such as E glass, S glass, S-2 GLASS^{®} or C glass; and silicon carbide or silicon carbide fibers containing titanium. Commercially available fibers may include: organic fibers, such as KEVLAR from DuPont; aluminum oxide-containing fibers, such as NEXTEL fibers from 3M; silicon carbide fibers, such as NICALON from Nippon Carbon; and silicon carbide fibers containing titanium, such as TYRRANO from Ube. In particular embodiments, the curable compositions may be used to form at least a portion of a circuit board or a printed circuit board. In some embodiments, the substrate may be coated with a compatibilizer to improve the adhesion of the curable or cured composition to the substrate.

### COMPOSITES AND COATED STRUCTURES

In some embodiments, composites may be formed by curing the curable compositions disclosed herein. In other embodiments, composites may be formed by applying a curable composition to a substrate or a reinforcing material, such as by impregnating or coating the substrate or reinforcing material, and curing the curable composition.

The above described curable compositions may be in the form of a powder, slurry, or a liquid. After a curable composition has been produced, as described above, it may be disposed on, in, or between the above described substrates, before, during, or after cure of the curable composition.

For example, a composite may be formed by coating a substrate with a curable composition. Coating may be performed by various procedures, including spray coating, curtain flow coating, coating with a roll coater or a gravure coater, brush coating, and dipping or immersion coating.

In various embodiments, the substrate may be monolayer or multi-layer. For example, the substrate may be a composite of two alloys, a multi-layered polymeric article, and a metal-coated polymer, among others, for example. In other various embodiments, one or more layers of the curable composition may be disposed on or in a substrate. Other multi-layer composites, formed by various combinations of substrate layers and curable composition layers are also envisaged herein.

In some embodiments, the heating of the curable composition may be localized, such as to avoid overheating of a temperature-sensitive substrate, for example. In other embodiments, the heating may include heating the substrate and the curable composition.

Curing of the curable compositions disclosed herein may require a temperature of at least about 30°C, up to about 250°C, for periods of minutes up to hours, depending on the resin composition, hardener, and catalyst, if used. In other embodiments, curing may occur at a temperature of at least 100°C, for periods of minutes up to hours. Post-treatments may be used as well, such post-treatments ordinarily being at temperatures between about 100°C and 200°C.

In some embodiments, curing may be staged to prevent exotherms. Staging, for example, includes curing for a period of time at a temperature followed by curing for a period of time at a higher temperature. Staged curing may include two or more curing stages, and may commence at temperatures below about 180°C in some embodiments, and below about 150°C in other embodiments.

In some embodiments, curing temperatures may range from a lower limit of 30°C, 40°C, 50°C, 60°C, 70°C, 80°C, 90°C, 100°C, 110°C, 120°C, 130°C, 140°C, 150°C, 160°C, 170°C, or 180°C to an upper limit of 250°C, 240°C, 230°C, 220°C, 210°C, 200°C, 190°C, 180°C, 170°C, 160°C, where the range may be from any lower limit to any upper limit.

The curable compositions and composites described herein may be useful as adhesives, structural and electrical laminates, coatings, castings, structures for the aerospace industry, and as circuit boards and the like for the electronics industry, among other applications. The curable compositions disclosed herein may also be used in electrical varnishes, encapsulants, semiconductors, general molding powders, filament wound pipe, storage tanks, liners for pumps, and corrosion resistant coatings, among others. In selected embodiments, the curable compositions described herein may be useful in the formation of resin coated foils, similar to those as described in U.S. Patent No. 6,432,541, which is incorporated herein by reference.

Various processing techniques can be used to form composites containing the epoxy-based compositions disclosed herein. For example, filament winding, solvent prepregging, and pultrusion are typical processing techniques in which the uncured epoxy resin may be used. Moreover, fibers in the form of bundles may be coated with the uncured epoxy resin composition, laid up as by filament winding, and cured to form a composite.

The epoxy resin compositions and composites described herein may be useful as adhesives, structural and electrical laminates, coatings, castings, structures for the aerospace industry, as circuit boards and the like for the electronics industry, as well as for the formation of skis, ski poles, fishing rods, and other outdoor sports equipment. The epoxy compositions disclosed herein may also be used in electrical varnishes, encapsulants, semiconductors, general molding powders, filament wound pipe, storage tanks, liners for pumps, and corrosion resistant coatings, among others.

In order to provide a better understanding of the embodiments disclosed above, including representative advantages thereof, the following examples are offered.

### EXAMPLES

The general procedure to prepare solid catalysts in the following examples is to first charge imidazole, amine, when used, and a portion of an epoxy resins (such as an aliphatic epoxy, or XZ 92447.00, D.E.R.* 732, or D.E.R.* 736, each of which are available from The Dow Chemical Company, Midland, Michigan) to a reactor to obtain a homogeneous mixture at ambient temperature. Liquid amine and liquid epoxy resin are typically used to obtain liquid mixture with a solid imidazole. This mixture is allowed to react so as to allow the mixture to reach higher temperatures, after which a liquid epoxy resin (such as D.E.R.* 330, D.E.R.* 383, or D.E.R.* 331, each of which are available from The Dow Chemical Company, Midland, Michigan) is added portion by portion to control the heat generation due to a strong exothermic reaction. The temperature is controlled below 140°C to have efficient reactions between epoxy and imidazole rather than epoxy-epoxy homopolymerization, and to remain below the decomposition temperature of any of the reactants.

### Example 1 (comparative)

A 1-liter reactor, nitrogen purged, is used for the reaction of 2-methylimidazole and an epoxy resin mixture, where the reactor is agitated and the reactor temperature is measured inside the reactor using a thermocouple placed near the vessel wall. 168 grams of 2-methylimidazole and 65 grams XZ 92447.00 (polyglycidyl ethers of polyhydric phenols) are added to the reactor. The reactor is then heated to 65°C, after which XZ 92447.00 is added ad 0.5 drops per second using a 250 ml dropping funnel. After addition of approximately 92 grams of XZ 92447.00, the reaction mixture exotherms to a peak temperature of approximately 91.6°C. Addition of XZ 92447.00 is continued at a rate of 1 drop per second. After the reaction mixture decreases in temperature to about 88°C, 15 ml of XZ 92447.00 is added to the reactor as a single shot. The total addition of XZ 92447.00 to the reactor is approximately 113 grams. The resulting mixture is then agitated for 12 minutes, during which time the temperature decreases from 88°C to 80°C.

D.E.R. 330 (a liquid bisphenol-A based epoxy resin, available from The Dow Chemical Company, Midland, MI), is then added at a rate of 1 drop per 5 seconds using a 250 ml dropping funnel. The drop rate is limited due to the viscosity of D.E.R. 330. After addition of approximately 137 grams D.E.R. 330, the D.E.R. 330 is heated to approximately 50°C to increase the drop rate to approximately 2 drops per second. The reaction mixture reaches a peak temperature of approximately 123°C during addition of the heated D.E.R. 330. A total of approximately 311 grams D.E.R. 330 is added to the reactor. The reactor is then cooled and the resulting product is recovered as a reddish-brown solid.

Properties of the recovered catalyst are measured. The cone and plate viscosity (150°C) of the resulting solid is approximately 2 Pa·s (measured on an EIC Visco-Plot VPO, cone and plate, C-cone). The softening point of the solid catalyst, measured using a Mettler FP80+ Mettler FP83 combination, starting at 25°C at a 2°C/minute heating rate, is measured as 94.5°C. And, the amount of free 2-methylimidazole in the compound, as measured using HPLC, is about 5.1 weight percent.

### Example 2 (comparative)

A 1-liter reactor, nitrogen purged, is used for the reaction of 2-methylimidazole and an epoxy resin mixture, where the reactor is agitated and the reactor temperature is measured inside the reactor using a thermocouple placed near the vessel wall. 311.8 grams of D.E.R. 732P (a long chain polyglycol di-epoxide liquid resin, available from The Dow Chemical Company, Midland, MI), is added to the reactor, and the reactor is heated to a temperature of 40°C. 2-methylimidazole is added in approximately 15 gram portions. No exotherm is realized after addition of approximately 87 grams 2-methylimidazole, after which the reactor is heated to a temperature of 50°C. An additional 27 grams of 2-methylimidazole is added to the reactor, where the reaction mixture is observed to be a turbid slurry. The reactor is then heated to 65°C and 25 grams additional 2-methylimidazole is slowly added. A slight exotherm is noted, after which the reactor is heated to a temperature of 80°C. The mixture turns to a brownish colored solution-like mixture and exotherms to a peak temperature of 86°C. 2-methylimidazole is also observed to sublime at the reaction temperature. The remaining 2-methylimidazole is then added slowly to reach a total imidazole feed amount of approximately 168.4 grams.

A total of about 326 grams D.E.R. 330 is added in 5 aliquots (45 g, 60 g, 71 g, 70 g, 30 g, and approximately 50 g, in the order given). Following each aliquot, the reaction temperature is monitored and controlled to a temperature of less than 150°C. After addition of the first aliquot, the reaction mixture exotherms to 98°C. Following the second aliquot, the mixture exotherms to 125°C and is then cooled using a water bath to a temperature of less than 115°C, at which point the reaction mixture is near clear (no longer a turbid slurry). The reaction mixture exotherms to a temperature of 145°C following the 71 g aliquot, and to approximately 148°C following the 70 gram aliquot. After the 50 g aliquot, an exotherm to 136°C is measured and the mixture viscosity increases. The reactor is then cooled and a reddish-brown solid is recovered.

Properties of the recovered catalyst are measured. The cone and plate viscosity (150°C) of the resulting solid is approximately 1.3 Pa·s. The softening point of the solid catalyst, measured using, measured using a Mettler FP80+ Mettler FP83 combination, starting at 25°C at a 2°C/minute heating rate, is measured as 82°C.

### Example 3 (comparative)

A 1-liter reactor, nitrogen purged, is used for the reaction of 2-methylimidazole and an epoxy resin mixture, where the reactor is agitated and the reactor temperature is measured inside the reactor using a thermocouple placed near the vessel wall. 148.2 grams of 2-methylimidazole and 21.9 grams XZ 92447.00 are added to the reactor, and the reactor is heated to a temperature of 75°C. Additional XZ 92447.00 is added dropwise over approximately 1.5 hours until a total of approximately 277.4 grams XZ 92447.00 is added. An additional 58 grams, 50.6 grams, and an additional 20.6 grams of 2-methylimidazole are added to the reactor, the first after approximately 1 hour of the XZ 92447.00 dropwise addition; the second following approximately 1.45 hours of the XZ 92447.00 dropwise addition, and the third following the approximately 1.5 hours of XZ 92447.00 dropwise addition. Additional XZ 92447.00 is added as a continuous flow over two 10-second intervals spaced 2 minutes apart. The reactor reached a maximum temperature of approximately 97°C, and a sample (Sample 1) is collected following complete addition of the XZ 92447.00. The total amount of XZ92447.00 and 2-methylimidazole added to the reactor are approximately 177.8 grams and 277.4 grams, respectively.

D.E.R. 330 is then added in small aliquots over approximately 3.25 hours, where the aliquots are added in small enough portions to keep the reactor temperature below approximately 130°C. A total of approximately 520 grams D.E.R. 330 is added, where reactor samples are collected following addition of approximately 250 grams D.E.R. 330 (Reactor Sample 2), 380 grams D.E.R. 330 (Reactor Sample 3), 416 grams D.E.R. 330 (Reactor Sample 4), 444 grams D.E.R. 330 (Reactor Sample 5), 463 grams D.E.R. 330 (Reactor Sample 6), 467 grams D.E.R. 330 (Reactor Sample 7), and 471 grams D.E.R. 330 (Reactor Sample 8). After complete addition of the D.E.R. 330, the reaction is completed, and the reactor is cooled to room temperature and emptied.

Properties of the recovered catalyst samples are measured as indicated in Table 1. Samples 1 and 2 were not solid at room temperature, and thus the softening point results are omitted from the property results presented in Table 1.

**Table 1**

| Reactor Sample No. | Softening Point (°C) | Cone and Plate Viscosity at 150°C (Pa·s) |
|---|---|---|
| 1 | N/A | --- |
| 2 | N/A | 0.12 |
| 3 | 72 | 0.48 |
| 4 | 77.5 | 0.74 |
| 5 | 81.7 | 1.08 |
| 6 | 86.1 | 1.28 |
| 7 | 83 | 1.32 |
| 8 | 87.8 | 1.36 |
| Final Product | 82.9 | --- |

### Example 4

A 1-liter reactor, nitrogen purged, is used for the reaction of 2-methylimidazole (2-MI) and an epoxy resin mixture, where the reactor is agitated and the reactor temperature is measured inside the reactor using a thermocouple placed near the vessel wall. 250 grams of 2-methylimidazole, 20 grams monoethanolamine, and 220 grams XZ 92447.00 are added to the reactor, and the reactor is heated to a temperature of 30°C. The reaction mixture exotherms and increases to a temperature of approximately 94°C, at which point 510 grams of D.E.R. 330 is apportioned to the reactor, where each portion is allowed to exotherm and stabilize, maintaining the reactor temperature below 135°C. Following the addition of approximately 137 grams D.E.R. 330, a first sample is taken (Reactor Sample 1). A second sample (Reactor Sample 2) is taken following complete addition of the D.E.R. 330.

50 grams of additional D.E.R. 330 is then added to the mixture to determine the effect of extra epoxy resin on the resulting catalyst (molecular weight, viscosity, free 2-methylimidazole, etc). Five additional 10 gram portions were added to the reaction mixture, and reactor samples are taken following completion of each exotherm (Reactor Samples 3-7). The reactor was then allowed to cool and the resulting catalyst was recovered (Final Product). Properties of the samples collected and the final catalyst are measured, the results of which are presented in Table 2.

**Table 2**

| Reactor Sample No. | T_{g} Onset, first heating (°C) | T_{g} Midpoint, first heating (°C) | T_{g} Inflection point, 1st heating (°C) | Cone and plate Viscosity at 150°C (Pa·s) | Free 2-MI (wt.%) | Mn | Mw | Mz | MWD |
|---|---|---|---|---|---|---|---|---|---|
| 1 | --- | --- | --- | --- | 5.0 | 1540 | 2670 | 4110 | 1.74 |
| 2 | 10.13 | 26.2 | 36.18 | 1.6 | 4.1 | 1540 | 2690 | 4050 | 1.74 |
| 3 | 20.11 | 30.85 | 36.69 | 1.6 | 3.6 | 1580 | 2720 | 4040 | 1.72 |
| 4 | 9.67 | 26.25 | 22.27 | 2 | 3.1 | 1600 | 2760 | 4080 | 1.73 |
| 5 | 15.34 | 30.77 | 38.72 | 2.16 | 2.8 | 1600 | 2760 | 4060 | 1.73 |
| 6 | 19.34 | 34.25 | 41.99 | 2.32 | 2.4 | 1590 | 2780 | 4080 | 1.75 |
| 7 | 23.19 | 36.9 | 42.86 | 2.48 | 2.0 | 1650 | 2860 | 4200 | 1.73 |
| Final Product | --- | --- | --- | 2.64 | 2.0 | 1600 | 2780 | 4080 | 1.74 |

### Example 5 (comparative)

The catalyst formed in Example 2 is compared to a typical catalyst used in the industry, EPI-CURE P101 (a reaction product of an epoxy resin and an imidazole, available from Hexion), for the cure of epoxy resin formulations as shown in Table 3. The formulated powders are applied with an electrostatic spray gun, which has a fluidized feeding chamber, onto 175°C preheated grit-blasted steel panels and are then post-cured at 170°C for 3 min. The applied coatings have a thickness of about 350 µm.

The adhesion performance of the coatings is characterized by hot water resistance and cathodic disbondment resistance, which are standard test methods in the pipe coating industry. For the hot water test, the coated steel panels are immersed in a water bath at 75°C for 48 hours and then attempts to scrape or peeled off the coating with a levering action are made. The test result is expressed on a rating scale from 1 to 5, 1 being the best and 5 being the worst. The results of the tests are also shown in Table 3.

**Table 3**

| Formulation | Comparative Example | Example 5 |
|---|---|---|
| D.E.R. 664 UE | 31.52 | 31.67 |
| D.E.R. 6615 | 31.52 | 31.67 |
| D.E.H. 90 | 7.4 | 7.47 |
| EPI-CURE P101 | 3.48 | 0 |
| Catalyst from Example 2 | 0 | 3.11 |
| MODAFLOW | 1 | 1 |
| BaSO₄, Blanc Fixe F | 20 | 20 |
| TiO₂ | 5 | 5 |
| | | |
| Gel Time @ 160°C, seconds | 26 | 32 |
| Impact (in*lb) | 156 / > 160 | > 160 / > 160 |
| Hot Water Resistance (75°C, 48 h) | 1-2 (15% peel off) | 1 (10% peel off) |
| Flexibility at -30°C (bending test) | Pass | Pass |

Example 5, having the catalyst of Example 2, shows better hot water resistance / impact resistance or at least equivalent results to that of the Comparative Example using EPI-CURE P101.

As described above, embodiments disclosed herein provide for the formation of epoxy-imidazole catalysts without the use of an added solvent. The solvent-free catalysts may be used in powder coating formulations for pipe coatings, heat sensitive substrate coatings, encapsulations, electrical laminates, ambient coatings, insulations, and composites, among other applications.

Advantageously, embodiments disclosed herein may provide for solvent-free epoxy-imidazole catalysts. Such solvent-free catalysts may result in improved coating performance as compared to similar catalysts formed in a process including solvents. For example, coatings formed from solvent-free epoxy-imidazole catalysts described herein may have one or more of improved hot water resistance, cathodic disband resistance, adhesion, and curability at low temperatures as compared to formulations formed using similar catalysts formed in a process including solvents.

While the disclosure includes a limited number of embodiments, those skilled in the art, having benefit of this disclosure, will appreciate that other embodiments may be devised which do not depart from the scope of the present disclosure. Accordingly, the scope should be limited only by the attached claims.

## Claims

1. A process of forming a solid epoxy-imidazole catalyst, the process comprising contacting an imidazole, an amine, and one or more epoxy resins, in the absence of added solvent, to form a solid epoxy-imidazole catalyst; wherein the contacting comprises:
(a) admixing an imidazole, an amine selected from monoethanolamine and diethanolamine, and a first portion of the one or more epoxy resins at a first temperature; and
(b) controllably adding a second portion of the one or more epoxy resins so as to maintain the admixture below a second temperature, wherein the contacting is performed at a temperature of less than 140°C.

2. The process of claim 1, wherein the one or more epoxy resins comprise at least one aliphatic or cycloaliphatic epoxy resin.

3. The process of any of the above claims, wherein the one or more epoxy resins comprise at least one of a bisphenol-A based epoxy resin and a polyglycol polyepoxide.

4. The process of any of the above claims, wherein the epoxy-imidazole catalyst is a solid at room temperature.

5. The process of claim 1, wherein the imidazole comprises 2-methylimidazole and the amine comprises at least one of monoethanolamine and diethanolamine.

6. A process for forming a curable composition, comprising:
(I) forming a solid epoxy-imidazole catalyst by the process of any one of claims 1 to 5; and
(II) admixing the solid epoxy-imidazole catalyst with at least one epoxy resin.

7. A process for forming a thermoset resin comprising thermally curing the curable composition formed by the process of claim 6 at a temperature of at least 60°C to form a thermoset resin.

8. The process of claim 7, wherein the thermoset resin is used in at least one of a coatings application, a composite application, for making a prepreg, and for making electrical laminates useful for the manufacture of printed circuit boards.

## Patentansprüche

1. Ein Verfahren zum Bilden eines festen Epoxid-Imidazol-Katalysators, wobei das Verfahren das In-Kontakt-Bringen eines Imidazols, eines Amins und eines oder mehrerer Epoxidharze in Abwesenheit eines hinzugefügten Lösungsmittels beinhaltet, um einen festen Epoxid-Imidazol-Katalysator zu bilden; wobei das In-Kontakt-Bringen Folgendes beinhaltet:
(a) Beimischen eines Imidazols, eines Amins, ausgewählt aus Monoethanolamin und Diethanolamin, und eines ersten Anteils des einen oder der mehreren Epoxidharze bei einer ersten Temperatur; und
(b) regulierbares Hinzufügen eines zweiten Anteils des einen oder der mehreren Epoxidharze, um die Beimischung unter einer zweiten Temperatur zu halten, wobei das In-Kontakt-Bringen bei einer Temperatur von weniger als 140 °C durchgeführt wird.

2. Verfahren gemäß Anspruch 1, wobei das eine oder die mehreren Epoxidharze mindestens ein aliphatisches oder cycloaliphatisches Epoxidharz beinhalten.

3. Verfahren gemäß einem der vorhergehenden Ansprüche, wobei das eine oder die mehreren Epoxidharze mindestens eines von einem Bisphenol-A-basierten Epoxidharz und einem Polyglykolpolyepoxid beinhalten.

4. Verfahren gemäß einem der vorhergehenden Ansprüche, wobei der Epoxid-Imidazol-Katalysator bei Raumtemperatur ein Feststoff ist.

5. Verfahren gemäß Anspruch 1, wobei das Imidazol 2-Methylimidazol beinhaltet und das Amin mindestens eines von Monoethanolamin und Diethanolamin beinhaltet.

6. Ein Verfahren zum Bilden einer härtbaren Zusammensetzung, das Folgendes beinhaltet:
(I) Bilden eines festen Epoxid-Imidazol-Katalysators durch das Verfahren gemäß einem der Ansprüche 1-5; und
(II) Beimischen des festen Epoxid-Imidazol-Katalysators zu mindestens einem Epoxidharz.

7. Ein Verfahren zum Bilden eines Duroplastharzes, das das thermische Härten der durch das Verfahren gemäß Anspruch 6 gebildeten härtbaren Zusammensetzung bei einer Temperatur von mindestens 60 °C zum Bilden eines Duroplastharzes beinhaltet.

8. Verfahren gemäß Anspruch 7, wobei das Duroplastharz in mindestens einem von einer Beschichtungsanwendung, einer Verbundstoffanwendung, zum Herstellen eines Prepreg und zum Herstellen elektrischer Laminate, die zur Herstellung von Leiterplatten nützlich sind, verwendet wird.

## Revendications

1. Un procédé de formation d'un catalyseur époxy-imidazole solide, le procédé comprenant la mise en contact d'un imidazole, d'une amine, et d'une ou plusieurs résines époxy, en l'absence de solvant ajouté, afin de former un catalyseur époxy-imidazole solide ; dans lequel la mise en contact comprend :
(a) le mélange d'un imidazole, d'une amine sélectionnée parmi la monoéthanolamine et la diéthanolamine, et d'une première portion de ces une ou plusieurs résines époxy à une première température ; et
(b) l'ajout de façon contrôlable d'une deuxième portion de ces une ou plusieurs résines époxy de manière à maintenir le mélange en dessous d'une deuxième température, la mise en contact étant effectuée à une température inférieure à 140 °C.

2. Le procédé de la revendication 1, dans lequel ces une ou plusieurs résines époxy comprennent au moins une résine époxy aliphatique ou cycloaliphatique.

3. Le procédé de n'importe lesquelles des revendications ci-dessus, dans lequel ces une ou plusieurs résines époxy comprennent au moins soit une résine époxy à base de bisphénol A, soit un polyépoxyde de polyglycol.

4. Le procédé de n'importe lesquelles des revendications ci-dessus, dans lequel le catalyseur époxy-imidazole est un solide à température ambiante.

5. Le procédé de la revendication 1, dans lequel l'imidazole comprend du 2-méthylimidazole et l'amine comprend au moins soit de la monoéthanolamine, soit de la diéthanolamine.

6. Un procédé pour former une composition durcissable, comprenant :
(1) la formation d'un catalyseur époxy-imidazole solide grâce au procédé de l'une quelconque des revendications 1 à 5 ; et
(11) le mélange du catalyseur époxy-imidazole solide avec au moins une résine époxy.

7. Un procédé pour former une résine thermodurcie comprenant le durcissement thermique de la composition durcissable formée grâce au procédé de la revendication 6 à une température d'au moins 60 °C afin de former une résine thermodurcie.

8. Le procédé de la revendication 7, dans lequel la résine thermodurcie est utilisée au moins soit dans une application de revêtements, soit dans une application de composites, soit pour réaliser un pré-imprégné, soit pour réaliser des stratifiés électriques utiles pour la fabrication de cartes de circuit imprimé.
